# EUROPEAN PATENT APPLICATION

(11) **EP 2 866 123 A2**
(43) Date of publication of application: **29.04.2015**
(21) Application number: 14185303.6
(22) Date of filing: 18.09.2014
(51) Int. Cl.: G06F 3/01

(54) **Screen operation apparatus and screen operation method**

(30) Priority: 28.10.2013 JP 2013223646
(71) Applicant: Omron Corporation, Kyoto-shi, Kyoto 600-8530 (JP)
(72) Inventor: Irie, Atsushi, Kyoto-shi, Kyoto 600-8530 (JP)
(74) Representative: Kilian Kilian & Partner

(57) **Abstract**

A screen operation apparatus (10) for enabling operation of a screen (40) by an operator (2), the screen operation apparatus (10, 70) comprising:
a processor configured to operate as an image input unit (11) configured to obtain images of a face of the operator (2) at a predetermined time interval;
a focus condition determination unit (14) configured to, using the images obtained by the image input unit (11), determine whether or not the operator (2) is focusing on the screen (40);
a face direction condition determination unit (15) configured to, using the images obtained by the image input unit (11), determine whether or not a face direction of the operator satisfies a predetermined condition; and
a screen operation unit (16) configured to execute a predetermined screen operation when the face direction condition determination unit (15) determines that the face direction of the operator (2) satisfies the predetermined condition and the focus condition determination unit (15) determines that the operator (2) is focusing on the screen (40).

## Description

### BACKGROUND

The present invention relates to a technique for enabling hands-free, non-contact operation of screen.

There are known methods for using line of sight (referred to as "line-of-sight input") as a means for operating a device (e.g., see Non-Patent Documents 1 to 3). Various applications for line-of-sight input are known, and for example, NTT DOCOMO, Inc. recently presented at CEATEC (Cutting-Edge IT & Electronics Comprehensive Exhibition) JAPAN 2012 a test model of an ibeam tablet terminal where pointer movement and screen scrolling that match the movement of a line of sight are possible.

The application has been gaining attention (see URL: http://www.tobii.com/en/gaze-interaction/global/demo-room/ntt-docomo-i-beam/). Also, JP 2009-227246A discloses an example of using line of sight as a means for unlocking a lock for preventing erroneous operation of a car navigation apparatus.

JP 2009-227246A is an example of background art.

Yukari Nakamatsu, Tetsuya Takiguchi, Yasuo Ariki, "Gaze Estimation Using 3D Active Appearance Models", Proceedings of the Meeting on Image Recognition and Understanding (MIRU) 2011, pp. 572-579, 2011 (Non-Patent Document 1); Takehiko Ohno, Naoki Mukawa, Atsushi Yoshikawa, "An Eyeball Model Based Eye Tracking Method", Proceedings of the 8th Symposium on Sensing via Image Information, pp. 307-312, 2002 (Non-Patent Document 2); and Yasuhiro Ono, Takahiro Okabe, Yoichi Sato, "Gaze Estimation from Low Resolution Images Insensitive to Segmentation Error" Proceedings of the Meeting on Image Recognition and Understanding (MIRU 2005), pp. 96-103, 2005 (Non-Patent Document 3) are also examples of background art.

### SUMMARY

In accordance with an embodiment of the present invention, there is provided a screen operation apparatus for enabling operation of a screen by an operator, the screen operation apparatus comprising: a processor configured to operate as an image input unit configured to obtain images of a face of the operator at a predetermined time interval; a focus condition determination unit configured to, using the images obtained by the image input unit, determine whether or not the operator is focusing on the screen; a face direction condition determination unit configured to, using the images obtained by the image input unit, determine whether or not a face direction of the operator satisfies a predetermined condition; and a screen operation unit configured to execute a predetermined screen operation when the face direction condition determination unit determines that the face direction of the operator satisfies the predetermined condition and the focus condition determination unit determines that the operator is focusing on the screen.

### BRIEF DESCRIPTION OF THE DRAWINGS

FIGS. 1A to 1C are diagrams showing examples of screen operations according to a first embodiment.
FIG. 2 is a diagram schematically showing a functional configuration of a screen operation apparatus according to the first embodiment.
FIG. 3 is a flowchart of main processing of the screen operation apparatus according to the first embodiment.
FIG. 4 is a diagram for describing focus condition determination according to the first embodiment.
FIGS. 5A and 5B are diagrams for describing face direction condition determination according to the first embodiment.
FIGS. 6A and 6B are diagrams for describing a modified example of the first embodiment.
FIG. 7 is a diagram schematically showing a functional configuration of a screen operation apparatus according to a second embodiment.
FIG. 8 is a flowchart of main processing performed by the screen operation apparatus according to the second embodiment.
FIG. 9 is a diagram for describing focus condition determination according to the second embodiment.
FIGS. 10A and 10B are diagrams for describing a modified example of the second embodiment.

### DETAILED DESCRIPTION

Device operation by means of line-of-sight input is expected to be used for various applications due to the fact that there is no need to use hands, no contact is required, and the like. However, in the method for performing operation input using only the movement of the line of sight, as with an ibeam tablet terminal, the line of sight needs to be moved broadly and frequently. For this reason, a heavier burden is placed on the eyes of the operator, and there is a risk of eyestrain and dizziness. Also, depending on the person, there is also a possibility that the line of sight cannot be moved as intended, and thus an intended operation cannot be performed, erroneous operation occurs, or the like.

Embodiments of the present invention have been devised in view of the foregoing problems and it is an object thereof to provide a method by which hands-free, non-contact operation of a screen can be performed and there is less operational burden and operation is easier compared to conventional line-of-sight input.

### First Embodiment

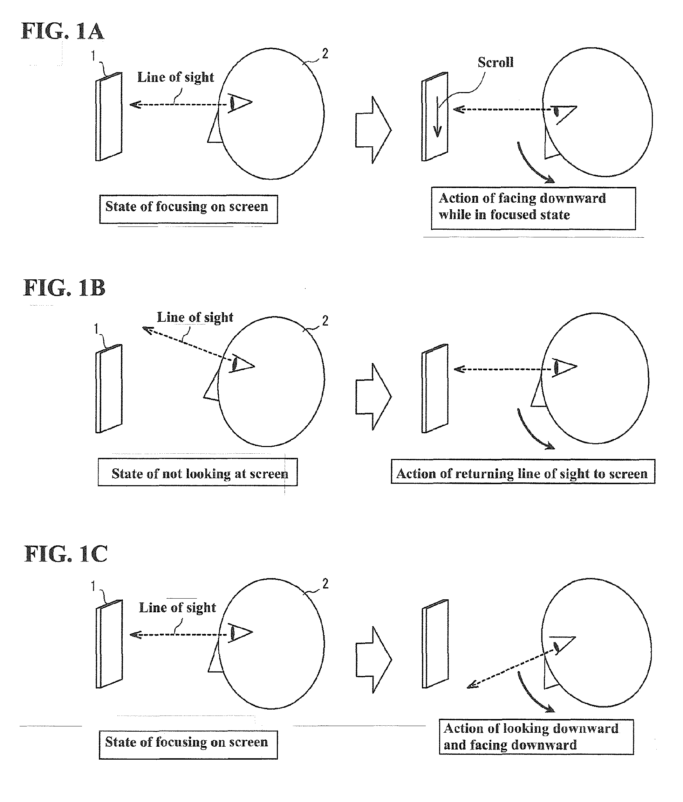

The first embodiment will describe an example in which a program for screen operation according to an aspect of the present invention is implemented in an electronic device (such as a smartphone), and screen operations, such as screen scrolling and page movement (page turning) in an application program (Web browser, e-mail software, document viewer, game, etc.) that operates on the electronic device, are performed using a combination of "line of sight" and "face direction". First, an example of a screen operation according to the present embodiment will be described with reference to FIGS. 1A to 1C, and thereafter, a specific apparatus configuration and processing for realizing this kind of screen operation will be described.

### Example of screen operations

In FIGS. 1A to 1C, a smartphone 1 and the face of an operator 2 operating the smartphone 1 are shown schematically from the side.

FIG. 1A is an example of a correct screen operation. An example is shown in which the operator 2 focuses on the screen of the smartphone 1 and while maintaining that state, faces downward, and accordingly, the screen scrolls down. Of course, the association between the face direction and the screen operation is not limited to this and any other association may be used. According to this operation method, the operator 2 can easily instruct a desired screen operation without using his or her hands.

Incidentally, there is a possibility that the face direction will change in the case where the operator 2 unwittingly performs an action such as taking his or her eyes away from the screen, turning toward a sound, rotating his or her neck to relieve fatigue, and the like. For example, FIG. 1B shows an action of returning the line of sight to the screen from a state in which the eyes have been taken away from the screen. Also, FIG. 1C shows a situation in which the line of sight has been shifted to the floor from a state in which the operator 2 is focusing on the screen. In either case, it is the same as FIG. 1A in terms of the movement of the face direction. Accordingly, for example, if it is determined whether or not a screen operation needs to be executed based on only the face direction, there is a possibility that a screen operation will be mistakenly executed based on an unintended change in face direction, as shown in FIGS. 1B and 1C. This is because the apparatus cannot accurately determine whether or not the detected change in the face direction was intended for a screen operation.

In view of this, in the present embodiment, with the use of line-of-sight information and the face direction as well, screen operation by means of face direction is made possible only during a state in which the operator 2 is focusing on the screen, as shown in FIG. 1A. That is to say, in the case of FIGS. 1B and 1C, the smartphone 1 does not recognize the change in the face direction of the operator 2 as a screen operation instruction since the screen focus state is not maintained. Accordingly, it is possible to suppress erroneous operation due to unintended changes in face direction, and operation input with superior operability and usability can be realized.

### Apparatus configuration

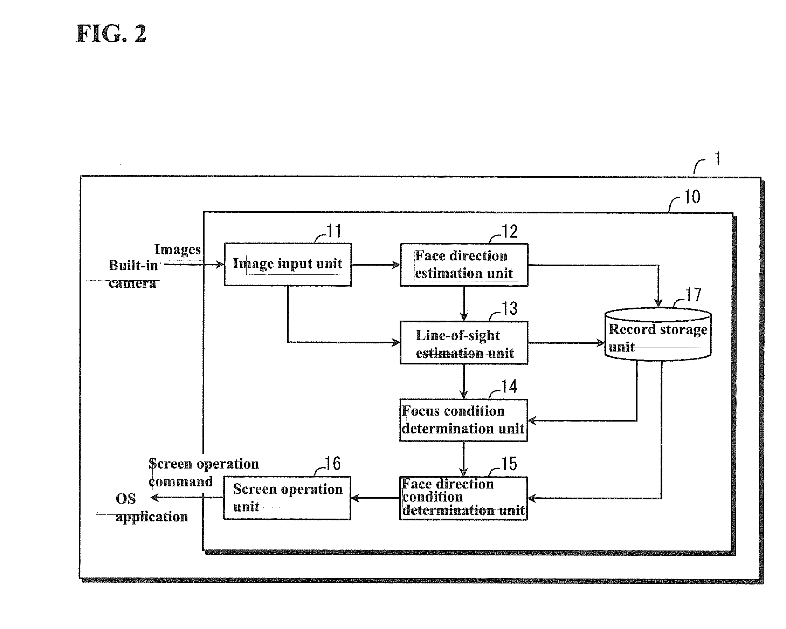

FIG. 2 is a diagram schematically showing a functional configuration of a screen operation apparatus according to the first embodiment. The screen operation apparatus 10 is for enabling operation of a screen of the smartphone 1 by the operator 2 and is implemented as an operation input interface of the smartphone 1. The screen operation apparatus 10 has an image input unit 11, a face direction estimation unit 12, a line-of-sight estimation unit 13, a focus condition determination unit 14, a face direction condition determination unit 15, a screen operation unit 16, and a record storage unit 17. These functions are realized by a program for screen operation stored in a memory (storage apparatus) of the smartphone 1 being executed by a processor. The record storage unit 17 is a storage region retained in a working memory. Note that all or a portion of these functional elements may be configured by a dedicated chip (ASIC, FPGA, or the like).

The image input unit 11 is a function for obtaining images of the face of the operator 2 from a built-in camera of the smartphone 1. When the screen operation apparatus 10 is starting up, images are obtained at a predetermined time interval (e.g., a few to around a dozen frames in one second) by the image input unit 11.

The face direction estimation unit 12 is a function of estimating the face direction of the operator 2 by analyzing the images obtained by the image input unit 11. Many algorithms for estimating the face direction from the images have been proposed (e.g., see Non-Patent Document 1), and any algorithm may be employed. The face direction estimation unit 12 of the present embodiment estimates the position and size of the face, the face direction, the positions of facial parts such as eyes, nose, and mouth, and the like using a model fitting method in which a 3D model configured by groups of feature points of facial parts is applied to a face portion in an image. Note that the position in the depth direction (optical axis direction of camera) of the face (i.e., the distance between the screen and the face) can be estimated from the size of the face in the image, and the like. The face direction is obtained as an orientation vector of the 3D face model (3D vector). The 3D vector can be represented in any coordinate system, such as xyz, or roll-pitch-yaw, and in the present embodiment, a description is given using an xyz coordinate system.

The line-of-sight estimation unit 13 is a function of estimating the direction of the line of sight of the operator 2 by analyzing the images obtained by the image input unit 11. Many algorithms for line-of-sight detection and line-of-sight estimation have been proposed (e.g., see Non-Patent Documents 1 to 3), and any algorithm may be employed. For example, the result of the model fitting of the face direction estimation unit 12 is used to estimate the size and central position of the eyeballs based on the size of the face, the position of the eyes, and the like, and to detect the positions of the pupils based on the face image, and a vector connecting the center of the eyeball and the center of the pupil can be assumed to be the line-of-sight direction. That is to say, the line-of-sight direction may be estimated by learning the features (relative positions, darkness and lightness, texture, etc. of whites and pupils of eyes) of images of eyes in various line-of-sight directions in advance and evaluating the degree of similarity between the features. The line-of-sight direction is also obtained as a 3D vector. Note that a portion of the values of the 3D vectors of the line-of-sight directions may be made common with the values of the 3D vectors for the face directions (e.g., the coordinates of the start point are made common, etc.), and the 3D vectors of the line-of-sight direction may be represented using the relative values of the 3D vectors of the face direction (relative angles using the face direction 3D vector as a reference, etc.).

The focus condition determination unit 14 is a function of determining whether or not the operator 2 is focusing on the screen of the smartphone 1. Also, the face direction condition determination unit 15 is a function of determining whether or not the face direction of the operator 2 satisfies a predetermined condition. Also, the screen operation unit 16 is a function of executing a corresponding screen operation based on the determination results of the focus condition determination unit 14 and the face direction condition determination unit 15. The record storage unit 17 is a storage region for temporarily storing information such as the face direction, line of sight, and the like for each image. These functions will be described in detail later.

### Processing flow

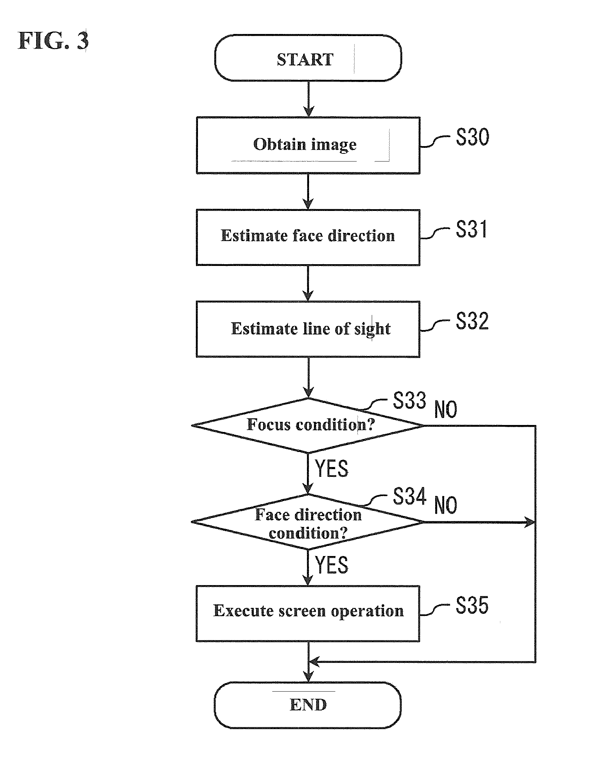

FIG. 3 is a flowchart of main processing performed by the screen operation apparatus according to the first embodiment. This processing is repeatedly executed at a predetermined time interval while a screen that is to be the operation target is displayed on the smartphone 1 (for example, when a screen capable of scrolling and page movement is displayed). As described above, a few to around a dozen frames of images are processed per second in the present embodiment, and therefore the flow in FIG. 3 is executed at a few to around a dozen cycles per second.

First, the image input unit 11 obtains one image from the camera (step S30). Here, the image that is to be used may be a monochrome image or a color image.

Next, in step S31, the face direction estimation unit 12 estimates the face direction from the image obtained in step S30. As a result of the face direction estimation, information regarding the 3D vector for the face direction, the size and position of the face, the positions of the facial parts, and the like can be obtained. The results of the face direction estimation are stored in the record storage unit 17.

Next, in step S32, the line-of-sight estimation unit 13 estimates the line of sight using the image obtained in step S30. In the case of using the result of the face direction estimation, it is sufficient that the necessary information is loaded from the record storage unit 17. As a result of the line-of-sight estimation, information regarding the position of the eyes of the operator 2, 3D vectors for the line-of-sight direction, and the like are obtained. The result of the line-of-sight estimation is stored in the record storage unit 17.

Next, the focus condition determination unit 14 references the line-of-sight estimation result stored in the record storage unit 17 and determines whether or not the operator 2 is focusing on the screen (step S33). "Focusing on the screen" means continuing to look at the screen for a predetermined amount of time or longer. Merely looking at the screen briefly is insufficient. In the present embodiment, the predetermined amount of time for determining focus is set to 1 second, but the value for the predetermined amount of time may be set appropriately according to the type of device being operated, the type of application, the size of the screen, and the like. Also, it is possible to allow the operator to change the setting value.

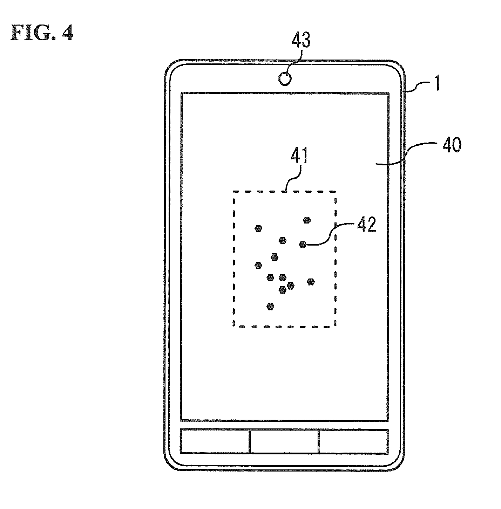

The determination processing performed by the focus condition determination unit 14 will be described next in detail with reference to FIG. 4. FIG. 4 is a diagram of a screen 40 of the smartphone 1 as viewed from the front, and the broken-line rectangle 41 in the center of the image shows a focus area 41 that is set on the screen. In the present embodiment, if the line of sight of the operator 2 remains in the focus area 41 for 1 second or more, it is determined that the current state is the "focused state". Specifically, the focus condition determination unit 14 reads out the line-of-sight estimation results (obtained during the most recent 1-second) from the record storage unit 17 and calculates the intersection between the line of sight and the screen for each line of sight. The relative positions of the camera 43 of the smartphone 1 and the screen 40 are already known, and therefore it is possible to geometrically calculate the intersection between the line of sight (straight line that passes through the position of the eye and is parallel with the line-of-sight direction) and the screen 40. Points 42 on the screen 40 in FIG. 4 are plotted as the intersections between the screen 40 and the most recent one-second-worth of lines of sight. With the example in FIG. 4, all of the points 42 are in the focus area 41, and therefore it is determined that the current state is the "focused state". If there is a line of sight that is shifted outside the focus area 41, it is determined that the current state is a "non-focused state". In order to increase the speed of the determination processing, it is preferable to store the coordinates of the calculated intersections or a flag indicating whether the line of sight is inside or outside of the focus area in the record storage unit 17, and the second and subsequent instances of calculating the intersection with respect to the same line of sight and determining whether the line of sight is inside or outside of the focus area are omitted.

Note that the position, size, and number of focus areas can be set arbitrarily. For example, the end portion of the screen may be set to be a focus area, focus areas may be set in four portions, namely the upper, lower, left, and right portions, of the screen, and the entire screen may be a focus area. Alternatively, the position, size, number, and the like of the focus area can also be changed dynamically according to the content displayed on the screen. For example, in the case of a browser or a document viewer, if a focus area is set at a position at which a document or an image is displayed, the reliability of determining the focus of the operator can be improved.

If it is determined that the current state is the "non-focused state" by the focus condition determination unit 14 (NO in step S33), processing for determining the face direction or the like is skipped, and the processing ends. Accordingly, it is possible to prevent erroneous operation due to an unintended change in face direction, as shown in FIGS. 1B and 1C.

On the other hand, if it is determined that the current state is the "focused state" by the focus condition determination unit 14 (YES in step S33), the procedure moves to the face direction determination in step S34. In step S34, the face direction condition determination unit 15 references the face direction estimation result stored in the record storage unit 17 and determines whether or not the face direction of the operator 2 satisfies a predetermined condition.

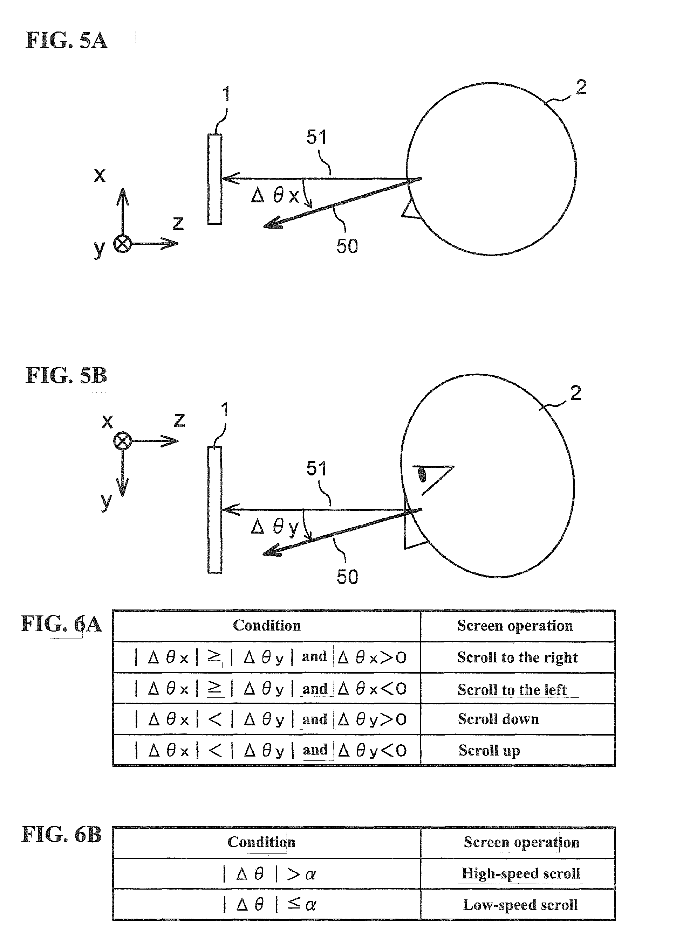

The determination processing of the face direction condition determination unit 15 will be described next in detail with reference to FIGS. 5A and 5B. The xyz coordinate system shown in FIGS. 5A and 5B is a coordinate system that uses the screen of the smartphone 1 as a reference, in which the x axis is in the screen lateral direction, the y axis is in the screen lengthwise direction, and the z axis is in the normal line direction of the screen. FIG. 5A is a diagram of the smartphone 1 and the face of the operator 2 as viewed from the y direction, and FIG. 5B is a diagram as viewed from the x direction.

It is assumed that a 3D vector 50 for the face direction is obtained as a result of the face direction estimation. An angle Δθ formed by the vector 50 for the face direction and a reference direction vector 51, or in other words, a face direction shift amount Δθ with respect to the reference direction is calculated by the face direction condition determination unit 15 for the x direction and the y direction. The shift amount in the x direction (angle about the y axis) is referred to as Δθx, and the shift amount in the y direction (angle about the x axis) is referred to as Δθy. Next, the face direction condition determination unit 15 compares the shift amounts Δθx and Δθy and a threshold value Δθth. If at least one of Δθx and Δθy is greater than equal to the threshold value Δθth, it is determined that "the face direction of the operator has shifted by a predetermined amount or more from the reference direction" (YES in step S34), and the procedure moves to step S35. On the other hand, if Δθx and Δθy are both smaller than the threshold value Δθth, that is, if the shift in the face direction is small, it is determined that a screen operation has not been input and the processing ends (NO in step S34). The threshold value Δθth is a parameter that can control the sensitivity of the face direction sensing, and can be set to any value that is greater than or equal to 0 degrees. In the case of being set to 0 degrees, the sensitivity is the highest, and even a slight shift of the face direction will be detected.

Here, examples of the reference direction include (a) the line-of-sight direction of the operator 2, (b) the face direction in the case where it is assumed that the face of the operator 2 is directly facing the screen (i.e., the z direction is the reference direction), (c) the face direction at the point in time when the operator 2 starts focusing on the screen, and the like. Reference direction (a) has the advantage of being intuitive and easy to understand since the state in which the line-of-sight direction and the face direction match is neutral (no shift in face direction). For example, it is thought that reference direction (a) is best suited for operations on a device with a large screen (e.g., a display of a computer, a television apparatus, etc.). Reference direction (b) has the advantage of not requiring calculation such as line-of-sight detection in the determination of the reference direction since it is determined uniformly with respect to the screen. For example, it is thought that reference direction (b) is best suited for the case where the accuracy of line-of-sight detection is not very high, and for operations on devices with small screens (e.g., smartphones, tablet terminals, etc.). Note that the operator need not always be in an orientation in which he or she is directly facing the screen. For example, a case is possible in which the screen is viewed from an oblique angle, or only the line of sight is pointed toward the screen. In such a case, it is preferable to use reference direction (c).

In step S35, the screen operation unit 16 executes a predetermined screen operation. For example, it is possible to operate the screen of an operating application program by transmitting a screen scrolling command or a page movement command using an OS (Operating System) or an API (Application Programming Interface) provided by the application program. Typically, screen scrolling and page movement (page turning) are screen operations, but other screen operations such as operation of a pointer, area designation, tab switching, and zooming in/out can be performed in this way too.

According to the above-described processing, by merely performing an operation of shifting the face direction while focusing on a focus area on the screen, the operator 2 can perform a screen operation. The flow in FIG. 3 is executed repeatedly, and therefore scrolling or page movement is executed continuously when the face direction is shifted while the focused state is maintained. Accordingly, with a simple operation of keeping the face direction shifted while an uninteresting page is displayed and returning the face direction to normal when an interesting page is displayed, it is possible to jump to an interesting page. Note that during that period, it is necessary to continue focusing on the screen, and since it is also necessary for the operator to visually confirm when to stop scrolling or page movement, it can be said that it is reasonable to use the focused state as a condition.

### Modified Example

In the first embodiment, the face direction condition determination unit 15 determines "whether or not the face direction of the operator has been shifted by a predetermined amount or more from the reference direction", but it is possible to use "whether or not the face direction of the operator remains shifted from the reference direction for a predetermined amount of time or longer" as a face direction condition. For example, if a screen operation is to be performed when the face direction remains shifted for 0.5 seconds or longer, the face direction condition determination unit 15 reads out the face direction estimation results (obtained during the most recent 0.5-seconds) from the record storage unit 17 and calculates the shift amount Δθ for each face direction. If |Δθ| ≠0 for all of the face directions in the most recent 0.5 seconds, it is determined that the face direction condition is satisfied and the screen operation of step S35 is executed. The predetermined amount of time in this case is also a parameter for controlling the sensitivity of the face direction sensing, and it is possible to set it to any value.

Alternatively, "whether or not the face direction of the operator remains shifted by a predetermined amount or more from the reference direction for a predetermined amount of time or more" may be used as the face direction condition. For example, if a screen operation is to be performed when the face direction remains shifted by Δθth or more for 0.5 seconds or longer, the face direction condition determination unit 15 reads out the estimation results (obtained during the most recent 0.5 seconds) from the record storage unit 17 and calculates the shift amount Δθ for each face direction. If |Δθ| ≥Δθth for all of the face directions in the most recent 0.5 seconds, it is determined that the face direction condition is satisfied and the screen operation of step S35 is executed.

Also, the threshold value Δθth can be determined in advance, the user can set it in advance, and it can be determined dynamically based on the distance between the screen (or operation target device) and the face (operator).

Also, the face direction condition determination unit 15 may use "that the face direction point is shifted by a predetermined amount or more from the reference position set on the screen" as a face direction condition. The "face direction point" is a point obtained by projecting a predetermined point on the face of the operator onto the screen in a direction parallel to the face direction, and it can be calculated geometrically based on the position of the face, the face direction, the position of the screen, and the like. Examples of the "predetermined point on the face of the operator" include the central point of the face, the peak of the nose, the central point between the eyes (between the eyebrows), or the like. Also, examples of the "reference position set on the screen" include (a) the intersection between the line of sight of the operator and the screen, (b) the face direction point of the face direction in the case where it is assumed that the face of the operator is directly facing the screen, (c) the face direction point of the face direction at the point in time when the operator starts focusing on the screen, (d) the central point of the screen, (e) the central point of the operation target area in the screen (an operation target window, etc.), or the like. Note that in this case as well, the face direction condition may be "whether or not the face direction point of the operator remains shifted for a predetermined amount of time or more from the reference position", or "whether or not the face direction point of the operator remains shifted by a predetermined amount or more from the reference position for a predetermined amount of time or longer". The predetermined amount (threshold value) in this case is not an angle and may be expressed using the distance ΔDth on the screen. The threshold value ΔDth can also be determined in advance, the user can set it in advance, and it can be determined dynamically based on the distance between the screen (or operation target device) and the face (operator).

Also, the face direction condition determination unit 15 may use "that the face direction point is shifted to the outer side of the reference area set on the screen" or "that the face direction point remains shifted to the outer side of the reference area for a predetermined amount of time or longer" as the face direction condition. The position, size, shape, and the like of the "reference area set on the screen" can also be determined in advance, it can be set by the user, or it can be determined dynamically based on the distance between the screen (or the operation target device) and the face (operator). For example, the position of the reference area may be determined using the above-described "reference position" as a reference (for example, setting the reference area such that it is centered about the reference position). Note that results that are substantially the same as changing the above-described threshold value ΔDth according to the distance between the screen and the face can be obtained if the size of the reference area is fixed.

Note that also in the case of the method for determining the shift with respect to the reference position or the reference area, the scrolling direction and the like can be changed according to whichever direction the face direction is shifted from the reference position or the reference area, which is similar to the first embodiment.

Separate values on the x axis and the y axis can be set as the threshold values Δθth and ΔDth. Also, separate values can be set for the + side and the-side of the x direction. Separate values can also be set for the + side and the-side of the y direction as well. As a benefit of setting separate values on the + side and the - side, a usage example is conceivable in which reduction of erroneous operation is achieved by reducing the threshold value in the page advancement direction so as to make it easier to scroll, or by increasing the threshold value in the page return direction so as to make it more difficult to scroll when browsing an e-book, for example. Similarly, it is possible to set separate values for the x axis and the y axis and to set separate values for the + side and the - side with respect to the "predetermined time" for face direction determination as well.

In the first embodiment, the distance between the target device (screen) and the operator (face) is estimated based on the size of the face in the image, but it is also possible to measure or estimate the distance using another method. For example, it is possible to employ a method of imaging the face of the operator using a stereo camera and calculating the distance in the depth direction based on parallax information, a method of measuring the distance to the operator by providing another distance sensor in the target device, or the like.

Note that the x-direction shift amount Δθx and the y-direction shift amount Δθy may be calculated and evaluated separately also in the case of the modified example stated herein. Also, in order to increase the speed of the determination processing, it is preferable that the calculated shift amount is stored in the record storage unit 17 and the second and subsequent instances of calculation with respect to the same face direction are omitted.

Also, in the first embodiment, the screen operation unit 16 executes only one type of screen operation, but it is also possible to provide a variety of screen operations. For example, the screen operation unit 16 may change the direction of scrolling or page movement according to the shift direction of the face direction of the operator 2. Specifically, the screen operation unit 16 stores a screen operation table such as that shown in FIG. 6A and switches the screen operation that is to be executed according to the face direction shift amounts Δθx and Δθy calculated by the face direction condition determination unit 15. In the example shown in FIG. 6A, scrolling to the right is performed in the case where |Δθx| ≥ |Δθy| and Δθx>0 (case where face is facing right), and scrolling to the left is performed in the case where |Δθx| ≥ |Δθy| and Δθx<0 (case where face is facing left). Also, scrolling down is performed in the case where |Δθx| < |Δθy| and Δθy>0 (case where face is facing down), and scrolling up is performed in the case where |Δθx|<|Δθy| and Δθy<0 (case where face is facing up). Thus, by matching the direction of scrolling with the shift direction of the face direction, a highly intuitive operability can be obtained. Note that a table of eight directions including not only up, down, left, and right, but also four orthogonal directions may be used, or scrolling in any direction may be performed.

Furthermore, the screen operation unit 16 may change the speed or amount of scrolling or page movement according to the shift direction of the face direction of the operator 2. Specifically, the screen operation unit 16 stores a screen operation table such as that shown in FIG. 6B and switches the speed and amount of the screen execution that is to be executed according to the face direction shift amount Δθ calculated by the face direction condition determination unit 15. In the example in FIG. 6B, scrolling speed is set to "high speed" in the case where |Δθ| >α, and the scrolling speed is set to "low speed" in the case where |Δθ| ≤α. With this kind of configuration, the change in the face direction is increased when high-speed scrolling is desired. Thus, it is possible to adjust the scrolling speed (amount) and page movement speed (amount) with an intuitive action. Note that in FIG. 6B, switching is performed between two steps, but switching between three or more steps may be performed, or switching may be performed continuously (without steps). Also, it is preferable to allow adjustment of multiple types of screen operations in multiple steps using a combination of FIG. 6A and 6B.

### Second Embodiment

In the first embodiment, screen operations were performed using a combination of "line of sight" and "face direction", whereas the second embodiment is different in that screen operations are performed using a combination of "line of sight" and "face movement". The basic configuration of the screen operation apparatus is similar to that of the first embodiment, and therefore redundant description will be omitted in the description of the second embodiment below.

### Apparatus configuration

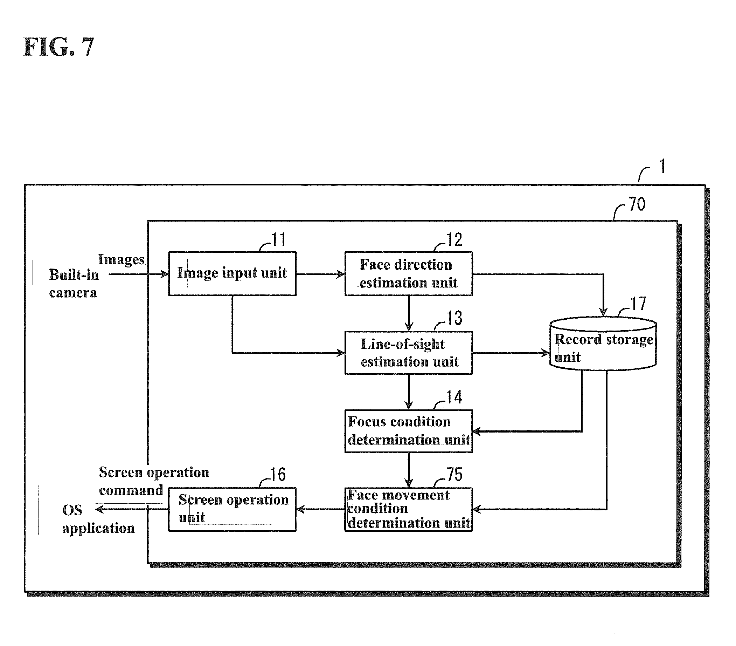

FIG. 7 is a diagram schematically showing a functional configuration of a screen operation apparatus according to the second embodiment. A screen operation apparatus 70 is for enabling operation of a screen of the smartphone 1 by the operator 2 and is implemented as an operation input interface of the smartphone 1. The screen operation apparatus 70 has an image input unit 11, a face direction estimation unit 12, a line-of-sight estimation unit 13, a focus condition determination unit 14, a face movement condition determination unit 75, a screen operation unit 16, and a record storage unit 17. Other than having the face movement condition determination unit 75 instead of the face direction condition determination unit 15, the configuration is the same as that of the first embodiment (FIG. 2). Therefore, where the configurations are the same, the same reference numerals are used.

### Processing flow

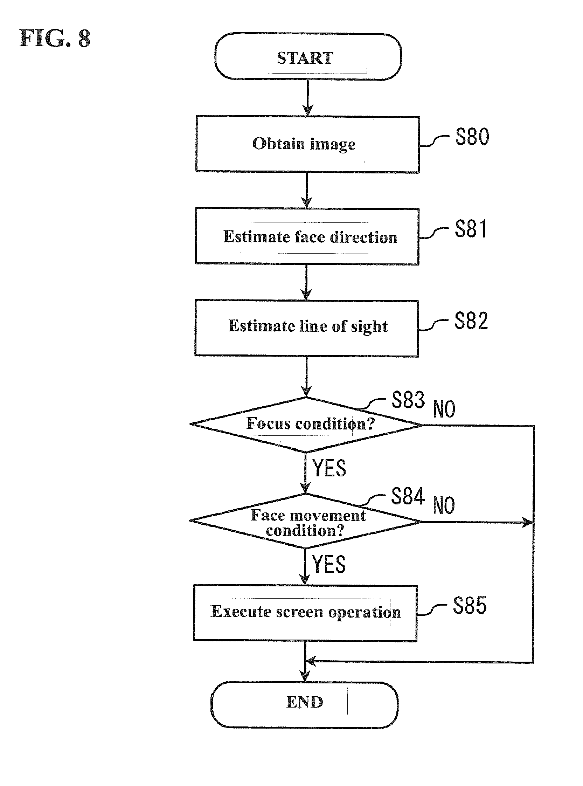

FIG. 8 is a flowchart of main processing performed by the screen operation apparatus according to the second embodiment. This processing is repeatedly executed at a predetermined time interval while a screen that is to be the operation target is displayed on the smartphone 1 (for example, when a screen capable of scrolling and page movement is displayed). As described above, a few to around a dozen frames of images are processed per second in the present embodiment, and therefore the flow in FIG. 8 is executed at a few to around a dozen cycles per second.

The processing of steps S80 to S82 is the same as that of steps S30 to S32 in the first embodiment (FIG. 3).

Next, the focus condition determination unit 14 references the line-of-sight estimation result stored in the record storage unit 17 and determines whether or not the operator 2 is focusing on the screen (step S83). Similarly to the first embodiment, the predetermined time for determining focus is set to 1 second.

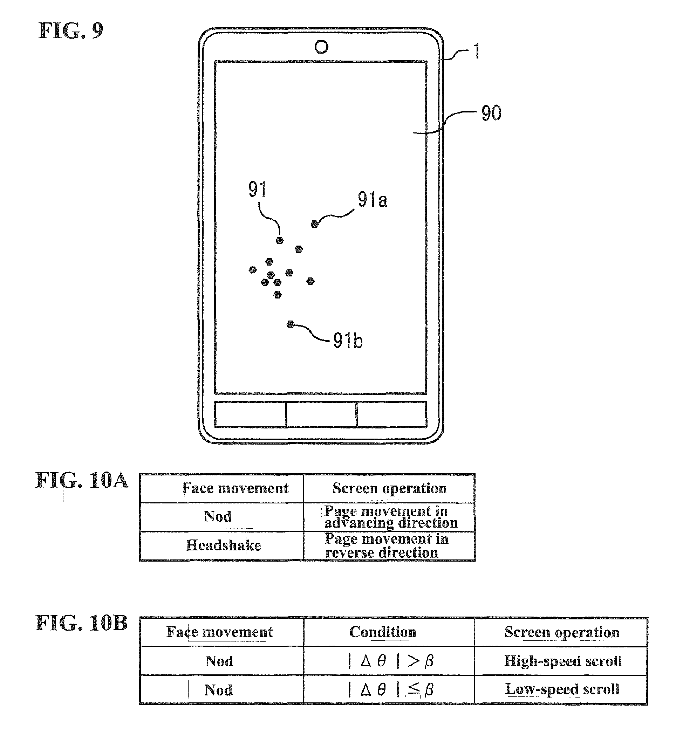

The determination processing performed by the focus condition determination unit 14 will be described next in detail with reference to FIG. 9. FIG. 9 is a diagram of a screen 90 of the smartphone 1 as viewed from the front. Points 91 on the screen 90 are obtained by plotting, over the most recent 1-second, intersections between the lines of sight and the screen. In the present embodiment, if the line of sight of the operator 2 is on the screen 90 and the amount of change in the line of sight of the operator 2 remains less than a predetermined amount for 1 second or longer, it is determined that the current state is the "focused state". Specifically, the focus condition determination unit 14 calculates the intersections between the screen and lines of sight during the most recent 1 second, similar to the first embodiment. Also, two points having the farthest distance between the two points are selected (points 91a and 91b in FIG. 9) from among the intersections, and if the distance between the two points is smaller than a predetermined threshold value, it can be determined that the current state is the "focused state". That is to say, unlike the first embodiment, it is determined that the current state is the focused state in the case where no focus area is provided in particular and the operator 2 continues to look somewhere on the screen 90. Rather than using the distance between two points, it is possible to evaluate whether or not the line of sight is being focused using the diameter of a circumscribed circle containing all of the points, the variance value of the coordinates of all of the points, or the like, for example. Note that in the present embodiment as well, the determination method of the first embodiment (method using focus area) may be employed, and conversely, it is also possible to use the determination method of the present embodiment in the first embodiment.

If it is determined that the current state is the "non-focused state" by the focus condition determination unit 14 (NO in step S83), processing for determining face movement is skipped and the processing ends. Accordingly, erroneous operation due to unintended face movement can be prevented.

On the other hand, if it is determined that the current state is the "focused state" which is determined by the focus condition determination unit 14 (YES in step S83), the procedure moves to the face movement condition determination in step S34. In step S84, the face movement condition determination unit 75 references the face direction estimation result stored in the record storage unit 17 and determines whether or not the face of the operator 2 has performed a predetermined movement.

Examples of the predetermined movement include (1) a movement of changing the face direction or the face orientation, (2) a movement of blinking or closing the eyes, (3) a movement of creating a predetermined expression, or the like. (1) The movement of changing the face direction is, for example, a nodding movement (movement of shaking head up and down; movement of rotation about the x axis), a headshake movement (movement of shaking head left and right; movement of rotation about the y axis), or the like. A vector for the face directions of the most recent several frames is read out from the record storage unit 17 and the change in the orientation of the vector is evaluated. Thus, it is possible to detect a nodding movement or a headshake movement. Also, a movement of changing the orientation of the face is, for example, a movement of tilting the head (movement of inclining the head portion left or right; movement of rotation about the z axis), or the like. It is also possible to perform detection using the fitting result of the 3D face model in the face direction estimation, for example. (2) A movement of blinking or closing the eyes can be detected by calculating the degree of opening the eyes based on the face direction estimation results or the line-of-sight estimation results and evaluating the change in the degree of opening the eyes of the most recent several frames. It is possible to detect the movement of both eyes, and it is possible to detect the movement of only one eye. (3) A movement of creating an expression is a movement of a facial part (eyes, nose, mouth, etc.), and expression such as a smile, opening or closing the mouth, or a movement of frowning, may be used. It is also possible to perform detection using the fitting result (positional relationship between facial parts) of the 3D face model in the face direction estimation, or the like, for example. Note that many algorithms for estimating face direction, face orientation, blinking, eye-shutting, expressions, and the like based on an image have been proposed, and any algorithm may be employed.

If it is determined that the face of the operator 2 has performed a predetermined movement (YES in step S84), the procedure moves to step S85. On the other hand, if a predetermined movement is not detected, it is determined that input of a screen operation was not performed, and the processing ends (NO in step S84).

In step S85, the screen operation unit 16 executes a predetermined screen operation. The processing of step S85 is similar to that of the first embodiment.

According to the above-described processing, by merely performing an operation of performing a predetermined movement such as a nod or a headshake while focusing on a portion of the screen, the operator 2 can perform a screen operation. The flow in FIG. 8 is executed repeatedly, and therefore scrolling or page movement is executed continuously when the face movement is repeated while the focused state is maintained. Accordingly, with a simple operation of continuing to move the face while an uninteresting page is displayed and stopping the movement when an interesting page is displayed, it is possible to easily jump to an interesting page. Note that during that period, it is necessary to continue focusing on the screen, and since it is also necessary for the operator to visually confirm when to stop scrolling or page movement, it can be said that it is reasonable to use the focused state as a condition.

### Modified Example

It is also possible to provide a variety of screen operations in the second embodiment as well, similarly to the first embodiment. For example, the screen operation unit 16 may change the direction of scrolling or page movement according to the type of movement of the face of the operator 2. Specifically, the screen operation unit 16 stores a screen operation table such as that shown in FIG. 10A and switches the screen operation that is to be executed according to the movement of the face detected by the face movement condition determination unit 75. For example in FIG. 10A, page movement in the advancing direction is executed with a nodding movement, and page movement in the reverse direction is executed with a head shaking movement. Accordingly, various screen operations can be performed.

Also, the screen operation unit 16 may change the speed or amount of scrolling or page movement according to the size of movement or the speed of movement of the face of the operator 2. Specifically, the screen operation unit 16 stores a screen operation table such as that shown in FIG. 10B and switches the speed or the amount of the screen operation that is to be executed, according to the size of movement or the speed of movement of the face detected by the face movement condition determination unit 75. For example in FIG. 10B, scrolling speed is set to "high speed" in the case where the angle Δθ of the nodding movement is |Δθ| >ß, and the scrolling speed is set to "low speed" in the case where |Δθ| ≤ß. With this kind of configuration, the movement of the face is made bigger or faster when high-speed scrolling is desired. Thus, it is possible to adjust the scrolling speed (amount) and page movement speed (amount) with an intuitive action. Note that in FIG. 10B, switching is performed between two steps, but switching between three or more steps may be performed, and switching may be performed continuously (without steps). Also, it is preferable to be able to adjust multiple types of screen operations in multiple steps using a combination of FIG. 10A and 10B.

### Other Embodiments

The configurations of the above-described embodiments are merely specific examples of the present invention and are not intended to limit the scope of the present invention. The present invention can employ various specific configurations within a range that does not stray from the technical idea thereof.

For example, in the above embodiments, the line-of-sight estimation unit 13 outputs a line-of-sight estimation result obtained by performing estimation based on one image, but a representative value for a plurality of lines of sight (e.g., mean, mode, or median value, or the like) obtained based on a plurality of images (e.g., a few to around a dozen frames) that were obtained successively may be output as the line-of-sight estimation result. In general, a person's line-of-sight direction can fluctuate in short intervals with sudden significant changes. Accordingly, the line of sight is unstable and there is a risk that the current state will never be determined as being the focused state, even if only instantaneous values for the line-of-sight direction are evaluated. In view of this, by using a representative value for a plurality of lines of sight, it is possible to mitigate or remove noise such as fluctuation or rapid change in the line-of-sight direction, and to achieve an improvement in the accuracy of the focus determination. Note that it is also preferable to apply similar processing to the face direction estimation.

The screen operation apparatus may also include a notification unit for notifying the operator of the fact that "focusing" has been determined. Accordingly, the operator can understand that the focus condition, which is a first condition, is satisfied and that he or she is in a state of being able to input a screen operation by means of face direction or face movement, and thus an improvement in usability is achieved. Note that a method such as displaying an icon or a predetermined graphic on the screen, displaying a message, illuminating an LED, notifying by means of noise, notifying by means of vibration, changing the color or thickness of the screen edge or the border of the window that is to be operated, or changing the size of the window in the case where the operation target is a window, can be employed, for example, as the notification method.

Also, a screen operation of a smartphone was illustrated as an example in the above embodiments, but an embodiment of the present invention can be favorably applied to any electronic device with a screen, such as, for example, a personal computer, a mobile phone, a tablet terminal (slate terminal), a portable information terminal, a game apparatus, a television apparatus, and an image capturing apparatus.

According to an embodiment of the present invention, in order to achieve the object, a configuration is employed in which a screen is operated using a combination of the line of sight and the face direction or a combination of the line of sight and a movement of the face. The target of operation may be an entire screen (or content displayed thereon), and it may be a portion of a screen (e.g., content displayed in a window or sub-screen).

Specifically, a screen operation apparatus according to a first aspect of the embodiment of the invention is a screen operation apparatus for enabling operation of a screen by an operator, the screen operation apparatus including: an image input unit configured to obtain images of a face of the operator at a predetermined time interval; a focus condition determination unit configured to, using the images obtained by the image input unit, determine whether or not the operator is focusing on the screen; a face direction condition determination unit configured to, using the images obtained by the image input unit, determine whether or not the face direction of the operator satisfies a predetermined condition; and a screen operation unit configured to execute a predetermined screen operation in the case where the face direction condition determination unit determines that the face direction of the operator satisfies a predetermined condition while the focus condition determination unit determines that the operator is focusing on the screen.

According to this configuration, it is possible to perform a screen operation using the face direction. In general, it is less burdensome to perform an intended action by changing the face direction than by moving the line of sight. Accordingly, operational burden can be reduced and operations can be simplified compared to conventional line-of-sight input.

Furthermore, with the first aspect of the embodiment of the invention, information regarding the line of sight can also be used in addition to the face direction. That is to say, screen operation by means of face direction is restricted such that it can only be performed while the operator is focusing on the screen. Accordingly, it is possible to suppress erroneous operation due to unintended changes in face direction, and operation input with superior operability and usability can be realized.

Examples of the predetermined condition include (1) that the face direction of the operator is shifted by a predetermined amount or more from a reference direction, (2) that the face direction point (which is a point obtained by projecting a predetermined point on the face of the operator onto the screen in a direction parallel to the face direction) of the operator remains shifted from the reference position for a predetermined amount of time or longer, and (3) that the face orientation of the operator remains shifted by a predetermined amount or more from a reference direction for a predetermined amount of time or longer. Examples of the reference direction include (a) the line-of-sight direction of the operator, (b) the face direction in the case where it is assumed that the face of the operator is directly facing the screen, and (c) the face direction at a point in time when the operator starts focusing on the screen.

Also, the predetermined condition may be (1) that the face direction point is shifted from the reference position set on the screen by a predetermined amount or more, (2) that the face direction point of the operator remains shifted from the reference position for a predetermined amount of time or longer, or (3) that the face direction point of the operator remains shifted by a predetermined amount or more from the reference position for a predetermined amount of time or longer. Examples of the "predetermined point on the face of the operator" include the central point of the face, the peak of the nose, and the central point between the eyes (between the eyebrows). Also, examples of the "reference position set on the screen" include (a) the intersection between the line-of-sight of the operator and the screen, (b) the face direction point of the face direction in the case where it is assumed that the face of the operator is directly facing the screen, (c) the face direction point of the face direction at a point in time when the operator starts focusing on the screen, (d) the central point of the screen, and (e) the central point of the operation target area on the screen.

Also, the predetermined condition may be (1) that a face direction point, which is a point obtained by projecting a predetermined point on the face of the operator onto the screen in a direction parallel to the face direction, is shifted to the outer side of a reference area set on the screen, or (2) that the face direction point of the operator remains shifted to the outer side of the reference area for a predetermined amount of time or longer. The position, size, shape, and the like of the "reference area set on the screen" can be set arbitrarily. For example, the position of the reference area may be determined using the above-described "reference position" as a reference.

For example, scrolling, page movement, or the like is preferable as the predetermined screen operation. This is because the movements of scrolling and page movement (page turning) are intuitively linked to the action of shifting the face direction (e.g., the actions of facing up, down, to the left, or to the right).

In such a case, it is preferable that the screen operation unit changes the direction of scrolling or page movement in accordance with the direction in which the face direction of the operator is shifted. For example, it is sufficient that scrolling to the right or page movement to the right is executed when the face is turned to the right, and scrolling or page movement in the opposite direction (left direction) is executed when the face is turned to the left. According to this, an intuitive operability is obtained.

Furthermore, the screen operation unit may change the speed or amount of scrolling or page movement in accordance with the amount by which the face direction of the operator is shifted. For example, it is preferable that the scrolling speed (amount) or the page movement speed (amount) is increased in a step-wise manner or continuously as the shift amount increases. Accordingly, the scrolling speed (amount) or the page movement speed (amount) can be adjusted with an intuitive action.

A screen operation apparatus according to a second aspect of the embodiment of the invention is a screen operation apparatus for enabling operation of a screen by an operator, the screen operation apparatus including: an image input unit configured to obtain images of a face of the operator at a predetermined time interval; a focus condition determination unit configured to, using the images obtained by the image input unit, determine whether or not the operator is focusing on the screen; a movement condition determination unit configured to, using the images obtained by the image input unit, determine a movement of the face of the operator; and a screen operation unit configured to execute a predetermined screen operation in the case where the movement condition determination unit determines that the face of the operator has performed a predetermined movement while the focus condition determination unit determines that the operator is focusing on the screen.

According to this configuration, it is possible to perform a screen operation by moving the face. In general, an intended action can be performed more easily by moving the face than by moving the line of sight. Accordingly, operational burden can be reduced and operations can be simplified compared to conventional line-of-sight input.

Furthermore, with the second aspect the embodiment of the invention, information regarding the line of sight can also be used in addition to the movement of the face. That is to say, screen operation by means of movement of the face is restricted such that it can be performed only while the operator is focusing on the screen. Accordingly, it is possible to suppress erroneous operation by means of unintended face movement, and operation input with superior operability and usability can be realized.

Examples of the predetermined movement include (1) a movement of changing the face direction or face orientation, (2) a movement of blinking or closing an eye, and (3) a movement of creating a predetermined expression, or the like. (1) A movement of changing the face direction is, for example, a nodding movement (movement of shaking head up and down), a headshake movement (movement of shaking head left and right), or the like. A movement of changing the face orientation is, for example, a movement of tilting the head (movement of inclining the head portion left or right), or the like. (2) The movement of blinking or closing an eye may be performed with both eyes or one eye. (3) A movement of creating an expression is a movement of a facial part (eyes, nose, mouth), and anything may be used, such as a smile, opening and closing the mouth, or frowning.

For example, scrolling, page movement, or the like is preferable as the predetermined screen operation. In this case as well, it is preferable that the screen operation unit changes the direction of scrolling or page movement in accordance with the type of movement of the face of the operator. For example, it is conceivable to perform scrolling or page movement in the advancing direction using a nodding movement, to perform scrolling or page advancement in the reverse direction using a headshake movement, and the like. Accordingly, various screen operations can be performed.

Also, the screen operation unit may change the speed or amount of scrolling or page movement in accordance with the size of movement or the speed of movement of the face of the operator. For example, when using a headshake movement, it is preferable that the scrolling speed (amount) or page movement speed (amount) is increased in a step-wise manner or continuously as the angle or speed of the headshake increases. Accordingly, the scrolling speed (amount) or the page movement speed (amount) can be adjusted with a highly intuitive action.

In the first aspect and second aspect of the embodiment of the present invention, it is preferable to further include a line-of-sight estimation unit configured to estimate lines of sight of the operator from the images obtained by the image input unit. Also, it is preferable that the focus condition determination unit determines that the operator is focusing on the screen in the case where a state in which the lines of sight of the operator are in a predetermined portion of the screen continues for a predetermined amount of time or longer. In other words, it is determined that the current state is a focused state if the operator continues to look at a predetermined portion set on the screen (also referred to as the focus area).

Alternatively, the focus condition determination unit may determine that the operator is focusing on the screen in the case where a state in which the lines of sight of the operator intersect the screen and the amount of change in the lines of sight of the operator is less than a predetermined value continues for a predetermined amount of time or longer. In other words, it is determined that the current state is the focused state in the case where no focus area is provided in particular and the operator continues to look somewhere on the screen. This kind of method is easier to use in some cases, depending on the content displayed on the screen.

It is preferable that the line-of-sight estimation unit obtains a plurality of lines of sight of the operator from a plurality of images obtained successively by the image input unit and outputs a representative value for the plurality of lines of sight obtained from the plurality of images as a line-of-sight estimation result. By using a representative value for the plurality of lines of sight (e.g., mean, mode, median value, or the like), it is possible to mitigate or remove noise such as fluctuation or sudden change in the line-of-sight direction and achieve an improvement in the accuracy of the focus determination.

In the first aspect and the second aspect of the embodiment of the present invention, it is preferable to furthermore include a notification unit configured to notify the operator of a state in which the focus condition determination unit has determined that the operator is focusing on the screen. According to this, the operator can know if it is possible to input screen operations and an improvement in usability is achieved.

Note that embodiments of the present invention can be understood as being a screen operation apparatus or an electronic device including the screen operation apparatus, which has at least a portion of the above-described configuration. Also, embodiments of the present invention can also be understood as being a screen operation method, a program for causing a computer to execute the steps of the method, or a computer-readable storage medium non-transitorily storing the program, that includes at least a portion of the above-described processing. Examples of electronic devices include a personal computer, a mobile phone, a smart phone, a tablet terminal (slate terminal), a portable information terminal, a game apparatus, a television apparatus, an image capturing apparatus. Embodiments of the present invention can be configured by combining the above-described configurations and processes, as long as no technical conflicts are generated.

According to an embodiment of the present invention, hands-free, non-contact operation of a screen can be performed and there is less operational burden and operation is easier compared to conventional line-of-sight input.

## Claims

1. A screen operation apparatus (10) for enabling operation of a screen (40) by an operator (2), the screen operation apparatus (10, 70) comprising:
a processor configured to operate as an image input unit (11) configured to obtain images of a face of the operator (2) at a predetermined time interval;
a focus condition determination unit (14) configured to, using the images obtained by the image input unit (11), determine whether or not the operator (2) is focusing on the screen (40);
a face direction condition determination unit (15) configured to, using the images obtained by the image input unit (11), determine whether or not a face direction of the operator satisfies a predetermined condition; and
a screen operation unit (16) configured to execute a predetermined screen operation when the face direction condition determination unit (15) determines that the face direction of the operator (2) satisfies the predetermined condition and the focus condition determination unit (15) determines that the operator (2) is focusing on the screen (40).

2. The screen operation apparatus (10) according to claim 1,
wherein the predetermined condition is
that the face direction of the operator (2) is shifted by a predetermined amount or more from a reference direction,
that the face direction of the operator (2) remains shifted from the reference direction for a predetermined amount of time or longer, or
that the face direction of the operator (2) remains shifted by a predetermined amount or more from the reference direction for a predetermined amount of time or longer.

3. The screen operation apparatus (10) according to claim 2,
wherein the reference direction is
a line-of-sight direction of the operator (2),
the face direction when it is assumed that the face of the operator is directly facing the screen (40), or
the face direction when the operator starts focusing on the screen (40).

4. The screen operation apparatus (10) according to claim 1,
wherein the predetermined condition is
that a face direction point, which is a point obtained by projecting a predetermined point on the face of the operator (2) onto the screen (40) in a direction parallel to the face direction, is shifted from a reference position set on the screen (40) by a predetermined amount or more;
that the face direction point of the operator (2) remains shifted from the reference position for a predetermined amount of time or longer, or
that the face direction point of the operator (2) remains shifted by a predetermined amount or more from the reference position for a predetermined amount of time or longer.

5. The screen operation apparatus (10) according to claim 4,
wherein the reference position is
an intersection between a line-of-sight of the operator (2) and the screen (40),
a point obtained by projecting a predetermined point on the face of the operator (2) onto the screen (40) in a direction parallel to the face direction when it is assumed that the face of the operator (2) is directly facing the screen (40),
a point obtained by projecting a predetermined point on the face of the operator (2) onto the screen (40) in a direction parallel to the face direction when the operator (2) starts focusing on the screen (40),
a central point of the screen (40), or
a central point of an operation target area on the screen (40).

6. The screen operation apparatus (10) according to claim 1,
wherein the predetermined condition is
that a face direction point, which is a point obtained by projecting a predetermined point on the face of the operator (2) onto the screen (40) in a direction parallel to the face direction, is shifted to an outer side of a reference area set on the screen (40), or
that the face direction point of the operator (2) remains shifted to the outer side of the reference area for a predetermined amount of time or longer.

7. The screen operation apparatus (10) according to claim 1,
wherein the predetermined screen operation is scrolling or page movement.

8. The screen operation apparatus (10) according to claim 7,
wherein the screen operation unit changes a direction of scrolling or page movement in accordance with a direction in which the face direction of the operator (2) or a face direction point is shifted,
the face direction point is a point obtained by projecting a predetermined point on the face of the operator (2) onto the screen (40) in a direction parallel to the face direction.

9. The screen operation apparatus (10) according to claim 7 or 8,
wherein the screen operation unit (16) changes a speed or an amount of scrolling or a page movement in accordance with an amount by which the face direction of the operator (2) or a face direction point is shifted,
the face direction point is a point obtained by projecting a predetermined point on the face of the operator (2) onto the screen (40) in a direction parallel to the face direction.

10. The screen operation apparatus (10) according to any one of claims 1 to 9, the processor further configured to operate as
a line-of-sight estimation unit (13) configured to estimate lines of sight of the operator (2) from the images obtained by the image input unit (11),
wherein when a state in which the lines of sight of the operator (2) are in a predetermined portion on the screen (40) continues for a predetermined amount of time or longer, the focus condition determination unit (14) determines that the operator (2) is focusing on the screen (40).

11. The screen operation apparatus (10) according to any one of claims 1 to 9, the processor further configured to operate as
a line-of-sight estimation unit (13) configured to estimate lines of sight of the operator (2) from the images obtained by the image input unit (11),
wherein when a state in which the lines of sight of the operator (2) intersect the screen and an amount of change in the lines of sight of the operator (2) is smaller than a predetermined amount continues for a predetermined amount of time or longer, the focus condition determination unit (14) determines that the operator (2) is focusing on the screen (40).

12. The screen operation apparatus (10) according to claim 10 or 11,
wherein the line-of-sight estimation unit (13) obtains a plurality of lines of sight of the operator (2) from a plurality of images obtained successively by the image input unit (11) and outputs a representative value for the plurality of lines of sight obtained from the plurality of images as a line-of-sight estimation result.

13. The screen operation apparatus (10) according to any one of claims 1 to 12, the processor further configured to operate as
a notification unit configured to notify the operator (2) of a state in which the focus condition determination unit (14) has determined that the operator (2) is focusing on the screen (40).

14. A screen operation method for enabling operation of a screen (40) by an operator (2), the screen operation method comprising:
a step in which a computer obtains images of a face of the operator (2) at a predetermined time interval;
a step in which the computer determines whether or not the operator (2) is focusing on the screen (40) using the images obtained;
a step in which the computer determines whether or not a face direction of the operator (2) satisfies a predetermined condition using the images obtained; and
a step in which the computer executes a predetermined screen operation when it is determined that the face direction of the operator (2) satisfies the predetermined condition and it is determined that the operator (2) is focusing on the screen (40).
